# EUROPEAN PATENT APPLICATION

(11) **EP 2 637 360 A1**
(43) Date of publication of application: **11.09.2013**
(21) Application number: 11837788.6
(22) Date of filing: 22.07.2011
(51) Int. Cl.: H04L 12/28, H04L 29/06, H04L 29/08

(54) **COMMUNICATION TERMINAL AND COMMUNICATION METHOD**

(30) Priority: 01.11.2010 JP 2010245147
(71) Applicant: Kabushiki Kaisha Toshiba, Inc., Tokyo 105-8001 (JP); Toshiba Consumer Electronics Holdings Corporation, Tokyo 101-0021 (JP); Toshiba Lighting & Technology Corporation, Yokosuka-shi, Kanagawa 237-8510 (JP)
(72) Inventor: MONMA, Nobuyuki, Kanagawa 237-8510 (JP); NAKAGAWA, Tatsuya, Kanagawa 237-8510 (JP)
(74) Representative: Bokinge, Ole
(86) International application number: PCT/JP2011/066654
(87) International publication number: WO 2012/060135

(57) **Abstract**

A communication terminal according to an embodiment of the present invention is provided with: a reception unit configured to receive a request packet including a packet identifier for identifying a packet, a service type, and a plurality of property information pieces regarding requests; a request processing unit configured to generate a response packet including property information of a response to property information regarding a request processed according to the service type among the plurality of property information pieces regarding the requests, and the packet identifier; and a transmission unit configured to transmit the response packet to the request terminal.

## Description

### Technical Field

Embodiments of the present invention relate to a communication terminal and a communication method.

### Background Art

Generally, with the recent progress of information communication, a communication protocol such as ECHONET for controlling instruments in a house is known. In the communication protocol such as ECHONET, a composite telegraphic message form is defined in addition to a basic telegraphic message form. The basic telegraphic message form is a form for controlling or acquiring a single property value in a single request telegraphic message. The composite telegraphic message form is a form for controlling or acquiring a plurality of property values in a single request telegraphic message.

### Citation List

### Non Patent Literature

[NPL 1] ECHONET Consortium, "ECHONET Specification Version 3.21 Part 4", [online] October 13, 2005, [Searched on October 22, 2010], Internet
   <http://www.echonet.gr.jp/8_kikaku/index.htm>

### Summary of Invention

### Technical Problem

However, for example, if an instrument which supports only the basic telegraphic message form receives a request telegraphic message of the composite telegraphic message form, there is a problem in that the request telegraphic message cannot be appropriately processed in the instrument.

Therefore, an object of the present invention is to provide a communication terminal and a communication method capable of appropriately processing a telegraphic message of a composite telegraphic message form.

### Solution to Problem

In order to solve the above-described problems, a communication terminal according to embodiments of the present invention includes a reception unit that receives a request packet including a packet identifier for identifying a packet, a service type, and a plurality of property information pieces regarding requests; a request processing unit that generates a response packet including property information of a response to property information regarding a request processed according to the service type among the plurality of property information pieces regarding the requests, and the packet identifier; and a transmission unit that transmits the response packet to a request terminal.

### Brief Description of Drawings

Fig. 1 is a diagram illustrating a system configuration of a communication system and a functional block of a request terminal and a response terminal related to embodiments.
Fig. 2 is a diagram illustrating a request packet and a response packet according to a first embodiment.
Fig. 3 is a flowchart illustrating a process performed by the response terminal according to the first embodiment.
Fig. 4 is a diagram illustrating a request packet and a response packet according to a second embodiment.
Fig. 5 is a flowchart illustrating a process performed by the response terminal according to the second embodiment.
Fig. 6 is a diagram illustrating a request packet and a response packet according to a third embodiment.
Fig. 7 is a flowchart illustrating a process performed by the response terminal according to the third embodiment. Description of Embodiments

Next, embodiments of the present invention will be described with reference to the drawings. In the following description of the drawings, the same or similar reference numerals are given to the same or similar parts.

### (First Embodiment)

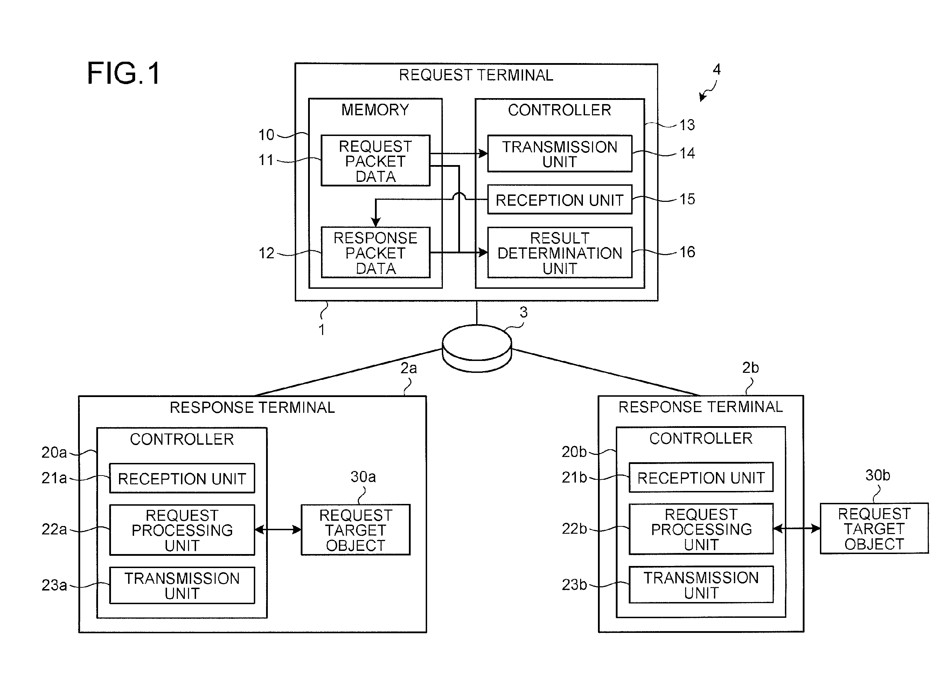

As illustrated in Fig. 1, a communication system 4 related to the embodiments includes a request terminal 1 and a response terminal 21. The request terminal 1 and the response terminal 2 are connected to each other via a communication network 3. In the embodiments, the communication network 3 is, for example, an ECHONET network.

The request terminal 1 and the response terminal 2 are ECHONET nodes, and are communication terminals based on the ECHONET specification. The request terminal 1 and the response terminal 2 are each instrument such as housing equipment, home appliance, or building or store equipment, and a server or the like which monitors, controls, and operates the instrument. In the embodiments, the request terminal 1 is a terminal which transmits a control or acquisition request telegraphic message to the response terminal 2. The response terminal 2 is a terminal which processes the request telegraphic message transmitted from the request terminal 1 and transmits a response telegraphic message to the request telegraphic message.

The response terminal 2 controls a request target object 30 which is an object of a request target or acquires a state on the basis of the request telegraphic message transmitted from the request terminal 1. As illustrated in Fig. 1, the request target object 30 may be provided in a casing of the response terminal 2 or may be provided in a casing different from that of the response terminal 2. The response terminal 2a in Fig. 1 is provided with the request target object 30a inside the response terminal 2a. In addition, the response terminal 2b is provided with the request target object 30b in a casing different from that of the response terminal 2b. The response terminals 2a and 2b function as the response terminal 2, and thus are indicated by the response terminal 2 if the response terminals 2a and 2b need not be particularly differentiated from each other.

In the communication system 4, according to the first embodiment, the request terminal 1 may allow a single request packet to include a plurality of property information pieces. In the first embodiment, particularly, a description will be made of a case where a single request packet includes at least one of acquisition and control as a service type. Specifically, a single request packet may include a plurality of service types by including both acquisition and control or any one thereof as a service type.

The response terminal 2 receives the request packet of a composite telegraphic message form from the request terminal 1 and transmits a response packet. The response terminal 2 allows property information regarding the response in relation to processed property information among a plurality of property information pieces included in the request packet to be included in the response packet. The response terminal 2 may process all the plurality of property information pieces included in the request packet or may not process all the property information pieces.

If the response packet is received from the response terminal 2, the request terminal 1 compares the number of properties included in the request packet with the number of properties included in the response packet so as to determine whether or not all properties regarding the request are processed in the response terminal 2. If all the properties are not processed, the request terminal 1 transmits the request packet again as necessary.

With reference to Fig. 1, each device according to the first embodiment will be described.

The request terminal 1 includes a memory 10 and a controller 13. A predetermined program is executed by the controller 13 of the request terminal 1, and thereby the request terminal 1 performs a process according to the predetermined program so as to refer to or update data stored in the memory 10. The memory 10 of the request terminal 1 stores request packet data 11 and response packet data 12.

The request packet data 11 is data of a packet which is transmitted to the response terminal 2 by the request terminal 1. The request packet data 11 has a composite telegraphic message form, and includes a packet identifier for identifying a packet, a service type, and a plurality of property information pieces regarding a request. Here, the service type indicates a request type and is one of an acquisition request and a control request. The acquisition is to refer to data of a request target object. The control is to control changing or the like in data of a request target object.

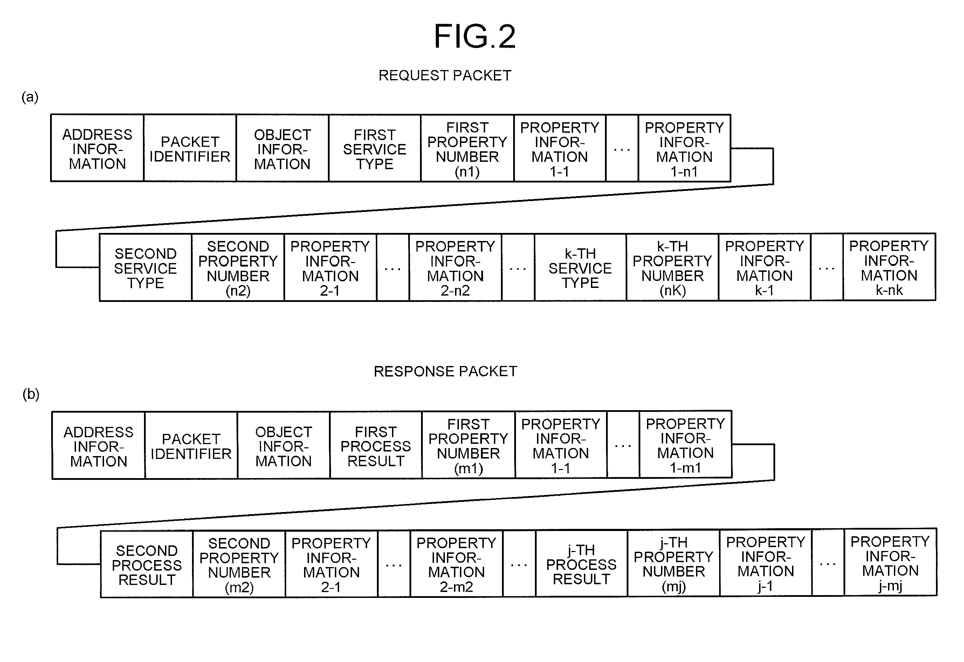

The request packet data 11 has a data structure, for example, as illustrated in Fig. 2 (a) . The address information designates addresses of a transmission source and a transmission destination of a request packet. Here, the transmission source of the request packet is the request terminal 1, and the transmission destination is the response terminal 2. Addresses according to the ECHONET specification are set in the address information.

An identifier of a request packet transmitted by the request terminal 1 is set in the packet identifier. The same packet identifier is set in a request packet and a response packet to the request packet, and thereby the request terminal 1 can determine a process result in the response terminal 2 by correlating the request packet and the response packet.

The object information is an object defined by the ECHONET specification. The ECHONET specification employs an inter-object communication form. Therefore, an object code of a request source and an object code of a request target are stored in the object information. Here, the object code of the request source is an identifier of an object which is the request source of the request terminal 1. The object code of the request target is an identifier of the request target object 30 of the response terminal 2 illustrated in Fig. 1.

The request packet illustrated in Fig. 2 (a) includes a first service type, a second service type, ..., and a k-th service type; and thus, the request packet includes k service types. The first service type is correlated with a first property number and a plurality of property information pieces. The first property number indicates the number of property information pieces which belong to the first service type. Here, the property information is formed by a property code, a property length, and a property value.

In the example illustrated in Fig. 2(a), the first service type is correlated with the first property information to n1-th property information, and thus n1 is set as the first property number. Similarly, the second service type is correlated with the second property number and a plurality of property information pieces. In the request packet illustrated in Fig. 2(a), the number of service types is not fixed, and thus only the first service type may be used. In addition, "acquisition" may be correlated as the first and third service types, and "control" may be correlated as the other service types.

The response packet data 12 is data of a packet which is received from the response terminal 2 by the request terminal 1. The response packet data 12 includes property information of a response to property information regarding a request processed according to a service type among a plurality of property information pieces regarding the request, and a packet identifier. In addition, the response packet data 12 may include a corresponding process result for each service type of the request packet. This process result indicates whether or not the request is successfully processed, and, specifically, "success" or "failure" is set.

The number of property information pieces regarding a response to a request included in the response packet data 12 may be different from the number of requests included in the request packet data 11. The response packet data 12 includes property information regarding a response to only a request processed in the response terminal 2 among a plurality of requests included in the request packet data 11. In addition, the number of process results included in the response packet data 12 may be different from the number of service types included in the request packet data 11. The response packet data 12 includes, for example, only a process result corresponding to a service type in which all property information pieces are processed in the request packet data 11. Therefore, if all of the service types and the property information pieces are processed in the response terminal 2, the number of process results included in the response packet data 12 is the same as the number of service types included in the request packet data 11.

The response packet data 12 has a data structure, for example, as illustrated in Fig. 2 (b). The address information designates addresses of a transmission source and a transmission destination of a response packet. Here, the transmission source of the response packet is the response terminal 2, and the transmission destination is the request terminal 1. Addresses according to the ECHONET specification are set in the address information.

The same values as the packet identifier and the object information of the request packet data 11 are set in the packet identifier and the object information.

The response packet illustrated in Fig. 2(b) includes a first process result, a second process result, ..., and a j-th process result; and thus the response packet includes j process results. The first process result is correlated with a first property number and a plurality of property information pieces. The first property number indicates the number of property information pieces which belong to the first process result. Here, the property information is formed by a property code, a property length, and a property value.

In the example illustrated in Fig. 2(b), the first process result is correlated with the first property information to m1-th property information, and thus m1 is set as the first property number. Similarly, the second process result is correlated with the second property number and a plurality of property information pieces.

Here, as illustrated in Fig. 2, the number of service types in the request packet may be different from the number of service types in the response packet. For example, the number of service types of the request packet illustrated in Fig. 2(a) is k, whereas the number of service types of the response packet illustrated in Fig. 2(b) is j. Here, if all the service types are processed in the response terminal 2, k is j.

In addition, the number of property information pieces correlated with the first service type in the request packet may be different from the number of property information pieces correlated with the first service type in the response packet. The number of property information pieces correlated with the first service type of the request packet illustrated in Fig. 2 (a) is n1, whereas the number of property information pieces correlated with the first process result of the response packet illustrated in Fig. 2(b) is m1. Here, if all the property information pieces corresponding to the first service type are processed in the response terminal 2, n1 is m1. Similarly, the number of property information pieces correlated with the second process result, the third process result,... in the response packet may be different from or the same as the number of properties correlated with the respective service types in the request packet.

As described above, only property information processed in the response terminal 2 is included in the response packet, and thereby there are cases in which the number of service types and the number of process results and the number of property information pieces included in each packet are different in the request packet and the response packet. In addition, if all property information pieces included in the request packet are processed in the response terminal 2, the number of service types is the same as the number of process results, and the number of property information pieces of each packet is also the same, in the request packet data 11 and the response packet data 12.

Next, each unit of the controller 13 of the request terminal 1 will be described. The controller 13 of the request terminal 1 includes a transmission unit 14, a reception unit 15, and a result determination unit 16.

The transmission unit 14 sends the request packet data 11 stored in the memory 11 to the communication network 3 via a communication control device (not illustrated) or the like. The sent request packet data 11 is transmitted to the response terminal 2 which is a request destination according to address information.

The reception unit 15 receives the response packet data 12 via the communication control device or the like and stores the response packet data 12 in the memory 12. The reception unit 15 receives the response packet data 12 from the response terminal 2 which is a transmission destination of the request packet data 11.

The result determination unit 16 determines a process result of the response terminal 2 on the basis of the request packet data 11 transmitted by the transmission unit 14 and the response packet data 12 received by the reception unit 15. Specifically, first, the result determination unit 16 reads the request packet data 11 and the response packet data 12 from the memory 11. Here, a code common to packet identifiers is set in the read request packet data 11 and response packet data 12. For example, if the reception unit 15 receives the response packet data 12, the result determination unit 16 specifies the request packet data 11 which has the same packet identifier as a packet identifier included in the received response packet data 12, and reads the request packet data 11.

The result determination unit 16 counts the property numbers which are respectively included in the read request packet data 11 and response packet data 12 and determines whether or not the property numbers match each other. If the property numbers match each other, the result determination unit 16 determines that the property information pieces are processed in the response terminal 2 on the basis of the property information regarding all the requests included in the request packet data 11.

If the property numbers do not match each other, the result determination unit 16 determines that all the property information pieces are not processed in the response terminal 2. Further, the result determination unit 16 may compare the first service type, the first property number, and property information correlated with the first service type of the request packet data 11, with the first process result, the first property number, and property information correlated with the first process result of the response packet data 12. Thereby, the result determination unit 16 can determine a result such as which property information being processed or failing to be processed among a plurality of property information pieces, for each property information piece.

In addition, the result determination unit 16 can understand the number of property information pieces which can be processed in the response terminal 2 from the number of property information pieces included in the response packet data 12. Thereby, the result determination unit 16 may generate new request packet data such that the number of property information pieces of requests which are not processed in the response terminal 2 becomes equal to or less than the number of property information pieces which can be processed in the response terminal 2. The transmission unit 14 transmits the new request packet data to the response terminal 2, and thereby the request terminal 1 can obtain responses to property information pieces of all the requests from the response terminal 2.

Next, the response terminal 2 will be described. The response terminal 2 includes a controller 20. A predetermined program is executed by the controller of the response terminal 2, and thereby the response terminal 2 can perform processes according to the predetermined program. In addition, the response terminal 2 may include a memory (not illustrated). The memory stores request packet data which is received from the request terminal 1. Further, the memory is a work area for storing a process result or the like regarding a request target object and for creating a response packet.

The controller 20 includes a reception unit 21, a request processing unit 22, and a transmission unit 23.

The reception unit 21 receives a request packet from the request terminal 1 via the communication control device (not illustrated). The request packet has the data structure illustrated in Fig. 2(a). The reception unit 21 stores the received request packet data in the memory so as to be processed by the request processing unit 22 described later.

The request processing unit 22 generates a response packet including property information of a response to property information regarding a request processed according to a service type among a plurality of property information pieces regarding requests, and a packet identifier. Here, the request processing unit 22 processes only property information which can be processed by the response terminal 2 among a plurality of property information pieces included in the request packet data.

For example, if the response terminal 2 can process only a single property, the response terminal 2 reads an initial single property information piece of the received request packet data and processes the request target object 30 on the basis of a service type thereof and property information. In this case, the request processing unit 22 allows property information of a response to the read and processed initial single property information piece to be included in response packet data. Furthermore, the request processing unit 22 discards property information pieces other than the initial single property information piece. In addition, property information which can be processed by the response terminal 2 may be restricted in consideration of a processing time or a processing capability of the controller 20 of the response terminal 2.

The transmission unit 23 sends the response packet data generated by the request processing unit 22 to the communication network 3 via the communication control device or the like. The sent response packet data is transmitted to the request terminal 1 which is a request source according to the address information.

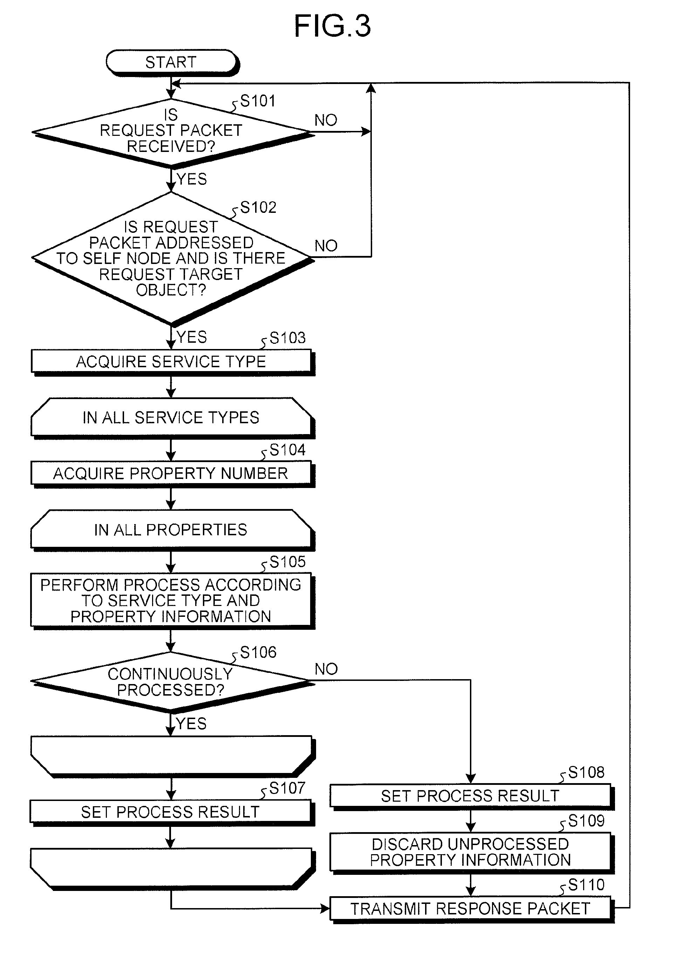

Here, with reference to Fig. 3, a description will be made of a process performed by the response terminal 2 according to the first embodiment. First, in step S101, the reception unit 21 of the response terminal 2 waits for a request packet to be received. If the request packet is received, in step S102, the response terminal 2 checks whether the request packet is addressed to the self node and object information included in the request packet is information of an object which is a target controlled by the response terminal.

In the example illustrated in Fig. 1, the response terminal 2a determines whether the received packet is a request packet addressed to the response terminal 2a. Here, the response terminal 2a controls the request target object 30a. Therefore, if the received packet is a request packet addressed to the response terminal 2a, the response terminal 2 further determines whether or not information of the request target object 30a is set as object information of the received request packet.

If the received request packet is not addressed to the self node, or if the object information included in the request packet is not information of an object which needs to be controlled by the self node, the received packet is discarded, and the flow returns to step S101. If the received request packet is addressed to the self node, and the object information included in the request packet is information of an object which needs to be controlled by the self node, the flow proceeds to step S103.

In step S103, the request processing unit 22 of the response terminal 2 acquires a service type included in the request packet. For example, in a case of the request packet illustrated in Fig. 2(a), k service types are acquired, and processes in step S104 to step S107 are performed on the acquired k service types.

Specifically, first, in step S104, the request processing unit 22 acquires a property number correlated with the first service type. In the example illustrated in Fig. 2(a), the request processing unit 22 acquires n1 which is set as the first property number and repeatedly performs processes in step S105 and step S106 on the n1 properties. First, the request target object 30 is processed in relation to the first property information, according to the service type and the property information. If the service type is "acquisition", the request processing unit 22 acquires data from the request target object 30 according to the property information. In addition, if the service type is "control", the request processing unit 22 controls the request target object 30 according to the property information. In step S105, the request processing unit 22 acquires property information of a response corresponding to the property information of the request.

In step S106, the request processing unit 22 determines whether or not the subsequent property information is processed. For example, if a process of property information is restricted based on a processing time in the response terminal 2, it is determined whether or not an elapsed time from step S103 exceeds a predetermined time. If the elapsed time does not exceed the predetermined time, the flow returns to step S105, and the request processing unit 22 processes further subsequent property information. If the process in step S105 is performed on all the property information pieces correlated with the first service type, in step S107, the request processing unit 22 sets data in the first process result on the basis of the process result in step S105. For example, if all the property information pieces are successfully processed, a flag of "success" is set in the first process result.

Next, the request processing unit 22 repeatedly performs the processes in step S104 to step S106 on the second service type. If the processes in step S104 to step S106 for all the service types are completed, the flow proceeds to step S110. In step S110, the request processing unit 22 generates a response packet, and the transmission unit 23 transmits the response packet to the request terminal 1.

On the other hand, if the process cannot be continuously performed in step S106, the request processing unit 22 proceeds to step S108 so as to create a response packet. The case where the process cannot be continuously performed is, for example, a case where an elapsed time from step S103 exceeds a predetermined time. In step S108, the request processing unit 22 sets data in the process result on the basis of the process result in step S105.

For example, a description will be made of a case where the request processing unit 22 processes three property information pieces and then cannot process a fourth property information piece in relation to the second service type. In this case, in step S108, the request processing unit 22 sets data in the second process result on the basis of the three property information pieces which are already processed in relation to the second service type. In addition, all of the property information pieces correlated with the first service type are processed. Therefore, in step S107, data is already set in the first process result.

In step S109, the request processing unit 22 discards property information pieces of requests which are not processed. Specifically, the request processing unit 22 discards property information pieces after the fourth property information piece of the second service type. Here, property information correlated with each service type after the third service type is also discarded.

In step S110, the request processing unit 22 generates a response packet data on the basis of the property information of the responses acquired in step S105, and the process results set in step S107 and step S108. The response packet data includes the first process result corresponding to the first service type of the request packet data, the property information of the responses, the second process result corresponding to the second service type, and the property information of responses corresponding to the property information of the processed requests. In addition, the response packet data does not include process results corresponding to service types after the third service type, which are not processed in step S105. The request processing unit 22 further sets addresses of the response terminal 2 and the request terminal 1 on the basis of the received request packet data, and generates address information of the response packet data. The request processing unit 22 sets an object code of the request target object 30 as object information and sets a packet identifier of the request packet data in a packet identifier.

According to the communication method according to the first embodiment, the response packet data 12 is generated so as to include property information of a response corresponding to property information of a processed request even if all property information pieces of a composite telegraphic message cannot be processed due to a processing capability or a specification of the response terminal 2. Thereby, it is possible to notify the request terminal 1 that a process in the response terminal 2 is restricted and to thereby press a request packet to be transmitted again.

In the general ECHONET specification, if errors based on the request packet data being a composite telegraphic message occur in the response terminal 2, it is difficult to send the errors to the request terminal 1. For example, the errors include not only a simple case where a process result for property information is negative, but also a case where a length of a telegraphic message which can be received by the response terminal is exceeded or the number of properties which can be processed is exceeded in the request packet data 11. These errors are all treated as the same error, and thus the response terminal cannot know causes of the errors and thus cannot complete a process.

Therefore, according to the communication method according to the first embodiment, since response packet data which includes only property information of a response processed in the response terminal is generated and is transmitted to the request terminal 1 in relation to the request packet data 11, the request terminal 1 can understand property information of a request which is not processed in the response terminal 2. In addition, the request terminal 1 can determine whether or not property information of a request is appropriately processed from the property information included in the response packet data.

As described above, according to the communication method according to the first embodiment, the response terminal 2 can appropriately process a telegraphic message of a composite telegraphic message form. In addition, since the response terminal 2 can process a composite telegraphic message as above, the request terminal 1 can also appropriately process property information.

### (Second Embodiment)

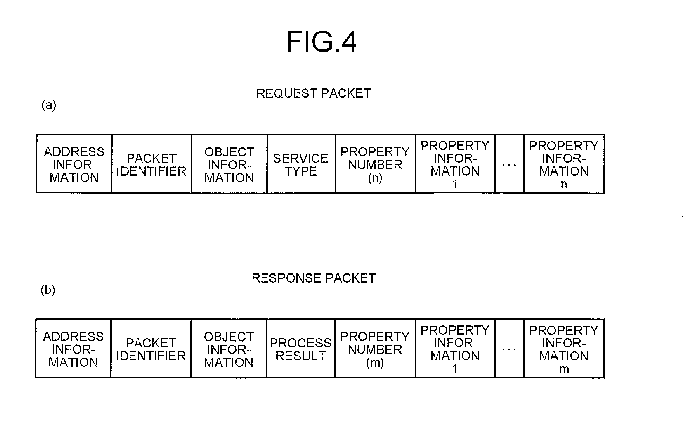

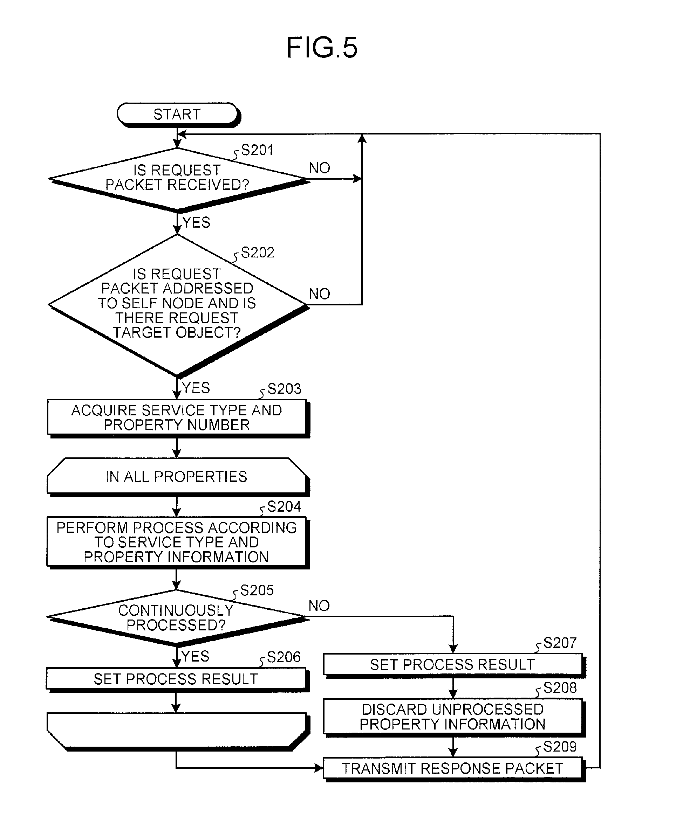

With reference to Figs. 4 and 5, a description will be made of a communication method according to the second embodiment. In the second embodiment, data structures of a request packet and a response packet illustrated in Fig. 4 are different from the data structures of a request packet and a response packet according to the first embodiment described with reference to Fig. 2.

In the request packet data according to the second embodiment, one of acquisition and control is designated as a service type. In addition, property information included in the request packet data is property information regarding a request for the designated service type.

Specifically, a plurality of service types are included in the request packet illustrated in Fig. 2(a) in the first embodiment, whereas only a single service type is included in the request packet illustrated in Fig. 4(a) in the second embodiment. Corresponding thereto, a plurality of process results are included in the response packet illustrated in Fig. 2(b) in the first embodiment, whereas only a single process result is included in the response packet illustrated in Fig. 4(b) in the second embodiment.

In the second embodiment, the number n of property information pieces of the request packet may be the same as or different from the number m of property information pieces of the response packet. In the response terminal 2, if all the property information pieces of the request packet can be processed, n is m.

With reference to Fig. 5, a description will be made of a communication method according to the second embodiment. step S201 and step S202 illustrated in Fig. 5 are the same as step S101 and step S102 illustrated in Fig. 3.

In step S203, the request processing unit 22 of the response terminal 2 acquires a service type and a property number included in the request packet. For example, in a case of the request packet illustrated in Fig. 4 (a), a single service type is acquired, and the property number n is acquired. The request processing unit 22 performs processes in step S204 and step S205 on each property information piece.

Specifically, first, in step S204, first, the request processing unit 22 processes the request target object 30 in relation to a first property information piece according to the service type and the property information. In step S204, the request processing unit 22 acquires property information of a response corresponding to property information of a request.

In step S205, the request processing unit 22 determines whether or not the subsequent property information is processed. For example, if a process of property information is restricted based on a processing time in the response terminal 2, it is determined whether or not an elapsed time from step S203 exceeds a predetermined time. If the elapsed time does not exceed the predetermined time, the flow returns to step S204, and the request processing unit 22 processes further subsequent property information. If the process in step S204 is performed on all the property information pieces, in step S206, the request processing unit 22 sets data in the process result on the basis of the process result in step S204. For example, if all the property information pieces are successfully processed, a flag of "success" is set in the process result. Thereafter, in step S209, response packet data is generated based on the property information of the response acquired in step S205 and the process result set in step S206. If the response terminal 2 has a sufficient processing capability and thus processes all the property information pieces of the request packet, the response terminal 2 performs a general process according to the ECHONET specification.

On the other hand, if the process cannot be continuously performed in step S205, the request processing unit 22 proceeds to step S207 so as to create a response packet. The case where the process cannot be continuously performed is, for example, a case where an elapsed time from step S203 exceeds a predetermined time. The request processing unit 22 proceeds to step S207 and sets data in the process result on the basis of the process result in step S204. Further, in step S208, the request processing unit 22 discards property information of a request which is not processed.

In step S209, the request processing unit 22 generates a response packet data on the basis of the property information of the responses acquired in step S205, and the process result set in step S206 or step S207. The generation process of the response packet data is the same as described in the first embodiment.

The response terminal 2 can appropriately process a telegraphic message of a composite telegraphic message form in the second embodiment as well. In addition, since the response terminal 2 can process a composite telegraphic message as above, the request terminal 1 can also appropriately process property information.

### (Third Embodiment)

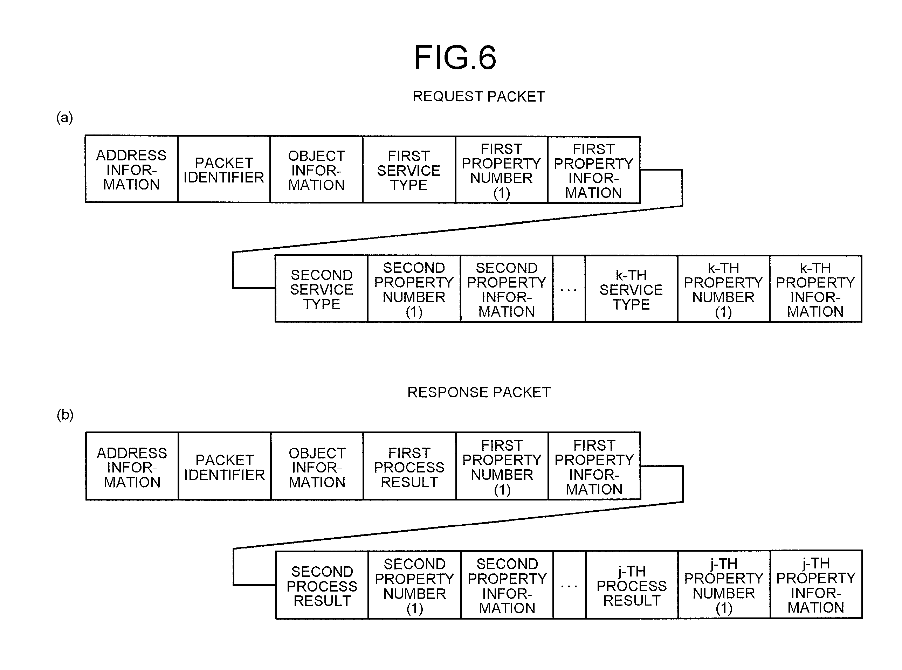

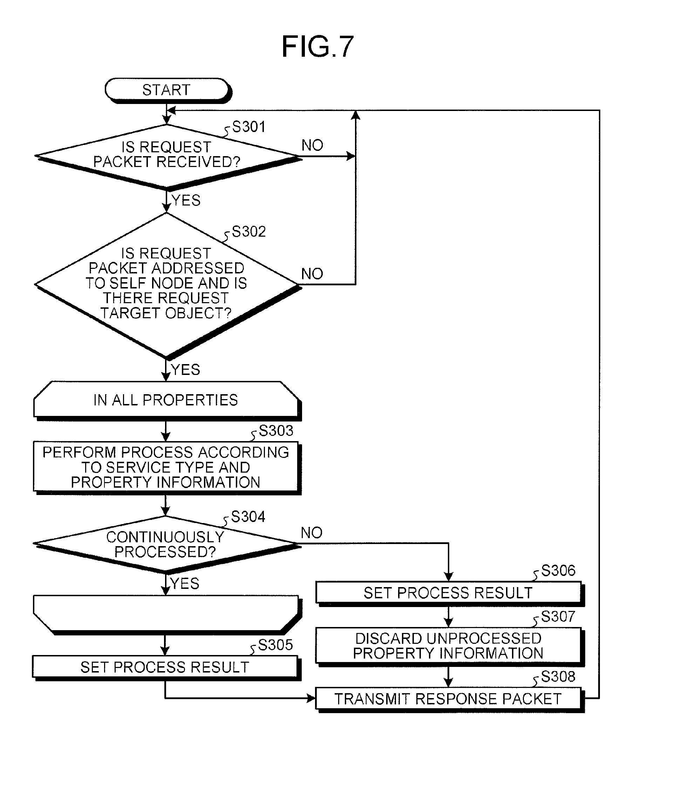

With reference to Figs. 6 and 7, a description will be made of a communication method according to the third embodiment. In the third embodiment, data structures of a request packet and a response packet illustrated in Fig. 6 are different from the data structures of a request packet and a response packet according to the first embodiment described with reference to Fig. 2.

In the third embodiment, the request packet data includes a service type and property information so as to correspond one to one. In addition, the request processing unit 22 of the response terminal 2 generates a response packet which correlates property information of a response to property information regarding a request processed according to the service type with a process result thereof one to one and includes a packet identifier.

Specifically, in the first embodiment, a plurality of property information pieces are correlated so as to correspond to the first service type in the request packet illustrated in Fig. 2(a), whereas, in the third embodiment, a single property information piece is correlated in the request packet illustrated in Fig. 6(a). In order to correspond thereto, a plurality of property information pieces are correlated so as to correspond to the first service type in the response packet illustrated in Fig. 2(b), whereas, in the third embodiment, a single property information piece is correlated in the response packet illustrated in Fig. 6(b). In addition, each property number of the packets illustrated in Figs. 6(a) and 6(b) is set to 1.

In addition, the number of property information pieces included in the request packet may be different from the number of property information pieces included in the response packet. The number of property information pieces of the request packet illustrated in Fig. 6 (a) is k, whereas the number of property information pieces of the response packet illustrated in Fig. 6(b) is j. Here, if all the property information pieces are processed in the response terminal 2, k is j.

With reference to Fig. 7, a communication method according to the third embodiment will be described. step S301 and step S302 illustrated in Fig. 7 are the same as step S101 and step S102 illustrated in Fig. 3.

The request processing unit 22 repeatedly performs the processes in step S303 and step S304 on all the property information pieces included in the request packet data.

Specifically, first, in step S303, the request processing unit 22 processes the request target object 30 in relation to a first property information piece according to the service type and the property information. In step S303, the request processing unit 22 acquires property information of a response corresponding to property information of a request.

In step S304, the request processing unit 22 determines whether or not the subsequent property information is processed. For example, if a process of property information is restricted based on a processing time in the response terminal 2, it is determined whether or not an elapsed time from step S302 exceeds a predetermined time. If the elapsed time does not exceed the predetermined time, the flow returns to step S303, and the request processing unit 22 processes further subsequent property information.

If the process in step S303 is performed on all the property information pieces, in step S305, the request processing unit 22 sets data in the process result on the basis of the process result in step S303. For example, if the process is successfully performed in each property information piece of the response, a flag of "success" is set in the process result.

On the other hand, if the process cannot be continuously performed in step S304, the request processing unit 22 proceeds to step S306 so as to create a response packet. The case where the process cannot be continuously performed is, for example, a case where an elapsed time from step S302 exceeds a predetermined time. The request processing unit 22 proceeds to step S306 and sets data in each process result of the response packet on the basis of the process result in step S303. Further, in step S307, the request processing unit 22 discards property information of a request which is not processed.

In step S308, the request processing unit 22 generates a response packet data on the basis of the property information of the responses acquired in step S303, and the process result corresponding to each property information piece set in step S305 or step S306. The generation process of the response packet data is the same as described in the first embodiment.

In the third embodiment as well, the response terminal 2 can appropriately process a telegraphic message of a composite telegraphic message form. In addition, since the response terminal 2 can process a composite telegraphic message as above, the request terminal 1 can also appropriately process property information.

Particularly, since a process result can be set for each property information piece in the third embodiment, the request terminal 1 can clearly understand a process result in the response terminal 2 for each property information piece of the request packet data.

According to at least one embodiment described above, the communication terminal can appropriately process a composite telegraphic message form.

Although several embodiments of the present invention have been described, the embodiments are presented as an example and are not intended to limit the scope of the invention. These novel embodiments can be implemented by other various forms and can be variously omitted, replaced, or changed within the scope without departing from the spirit of the invention. These embodiments and modifications thereof are included in the scope or the spirit of the invention and are included in the invention disclosed in the claims and the equivalents thereof.

## Claims

1. A communication terminal which receives a request packet of a composite telegraphic message form from a request terminal and transmits a response packet, comprising:
a reception unit configured to receive a request packet including a packet identifier for identifying a packet, a service type, and a plurality of property information pieces regarding requests;
a request processing unit configured to generate a response packet including property information of a response to property information regarding a request processed according to the service type among the plurality of property information pieces regarding the requests, and the packet identifier; and
a transmission unit configured to transmit the response packet to the request terminal.

2. The terminal according to claim 1, wherein either acquisition or control is designated as the service type in the request packet, and, the property information included in the request packet is property information regarding a request for the designated service type.

3. The terminal according to claim 1, wherein the request packet includes the service type and the property information, the service type and the property information are correlated with each other, and
the request processing unit is configured to generate a response packet which correlates property information of a response, which corresponds to property information regarding a request processed according to the service type with a process result of the property information one to one and includes the packet identifier.

4. A communication method of causing a communication terminal to receive a request packet of a composite telegraphic message form from a request terminal and transmit a response packet, comprising:
receiving a request packet including a packet identifier for identifying a packet, a service type, and a plurality of property information pieces regarding requests;
generating a response packet including property information of a response to property information regarding a request processed according to the service type among the plurality of property information pieces regarding the requests, and the packet identifier; and
transmitting the response packet to the request terminal.

5. The method according to claim 4, wherein either acquisition or control is designated as the service type in the request packet, and the property information included in the request packet is property information regarding a request for the designated service type.

6. The method according to claim 4, wherein the request packet includes the service type and the property information, the service type and the property information are correlated with each other, and
in the generating of the response packet, a response packet which correlates property information of a response, which corresponds to property information regarding a request processed according to the service type with a process result of the property information one to one and includes the packet identifier is generated.
